(19) Europäisches Patentamt / European Patent Office / Office européen des brevets

(11) **EP 4 738 727 A1**

(12) **EUROPEAN PATENT APPLICATION**
published in accordance with Art. 153(4) EPC

(43) Date of publication:
**06.05.2026 Bulletin 2026/19**

(21) Application number: **23943732.0**

(22) Date of filing: **30.06.2023**

(51) International Patent Classification (IPC):
*H04B 10/07* (2013.01)

(52) Cooperative Patent Classification (CPC):
**H04B 10/07**

(86) International application number:
**PCT/JP2023/024425**

(87) International publication number:
**WO 2025/004344 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT, Inc.**
**Tokyo 100-8116 (JP)**

(72) Inventors:
• **TAKAHASHI Minami**
  **Musashino-shi, Tokyo 180-8585 (JP)**
• **SASAI Takeo**
  **Musashino-shi, Tokyo 180-8585 (JP)**
• **YAMAZAKI Etsushi**
  **Musashino-shi, Tokyo 180-8585 (JP)**
• **KISAKA Yoshiaki**
  **Musashino-shi, Tokyo 180-8585 (JP)**

(74) Representative: **Santarelli**
**Tour Trinity**
**1 bis Place de la Défense**
**92400 Courbevoie (FR)**

(54) **OPTICAL RECEIVER, OPTICAL TRANSMITTER, AND OPTICAL COMMUNICATION FAULT MONITORING METHOD**

(57) One aspect of the present invention provides an optical reception device including a monitoring unit configured to: optimize a polarization state by rotating each of a reference signal received in such a way as to be close to a reception signal and the reception signal; compute a power profile for each polarization for the signal with the optimized polarization state; and compute a power difference between the polarizations from the power profile for each polarization, and identify an occurrence position and a value of a polarization-dependent impairment from an occurrence position and a difference amount of the computed difference.

FIG. 1

**Description**

TECHNICAL FIELD

The present invention relates to a technology of an optical reception device, an optical transmission device, and a method of monitoring impairments in optical communication.

BACKGROUND ART

Polarization-dependent impairments such as polarization-dependent loss (PDL) and polarization mode dispersion (PMD) are one of major limiting factors that lower signal quality in polarization-multiplexed digital coherent systems required for high capacity and long range transmission (see, for example, Non Patent Literature 1).

The polarization mode dispersion is mode dispersion in which light propagating in two different polarization modes along a waveguide changes in speed in these modes due to external factors such as defects, temperature, and stress unique to the waveguide. In a case where high PMD locally exists in a transmission link such as laid fiber, a transmission rate of the system for correct operation is limited. Therefore, in order to maintain a secure network, a reliable technology for detecting and measuring the position of PMD is important.

Polarization-dependent loss is defined as a ratio of maximum output power to minimum output power for all polarization states, and is loss that appears in various link components such as a fiber coupler, a wavelength selective switch (WSS), and an erbium-doped fiber amplifier (EDFA). In general, the polarization state of an optical signal is not temporally maintained along the fiber, and thus polarization angles between the polarization state of the optical signal and various devices are formed in random directions. Therefore, the PDL behaves as probabilistically varying loss, resulting in a probabilistic variation in system performance. For this reason, it is necessary to design a margin assuming the worst case in order to secure reliability during operation life and avoid a system stop. The accumulated margin of individual PDL components increases ambiguity in signal quality estimation and limits the transmission rate. By accurately monitoring distributed PDLs that randomly and simultaneously occur in multiple span links, it is possible to avoid the worst case design and maximize the transmission rate.

Citation List

Non Patent Document

Non Patent Document 1: Takeo Sasai, Masanori Nakamura, et al., "0.77-dB Anomaly Loss Localization Based on DSP-Based Fiber-Longitudinal Power Estimation Using Linear Least", 2023 Optical Fiber Communications Conference and Exhibition (OFC), San Diego, CA, USA, 2023, W1H.4

SUMMARY OF INVENTION

Technical Problem

However, since power and dispersion that depend on polarization are impairments that require analysis for each polarization and have a property of depending on the polarization state, statistical processing and control of the polarization state are required, and this makes measurement difficult. Furthermore, it has been difficult to accurately acquire the true value and the position of a loss only by reception-side signal processing without using a dedicated measuring instrument.

In view of the above circumstances, an object of the present invention is to provide a technology capable of estimating loss and mode dispersion that depend on polarization in components in an optical transmission link.

Solution to Problem

One aspect of the present invention provides an optical reception device including a monitoring unit configured to: optimize a polarization state by rotating each of a reference signal received in such a way as to be close to a reception signal and the reception signal; compute a power profile for each polarization for the signal with the optimized polarization state; and compute a power difference between the polarizations from the power profile for each polarization, and identify an occurrence position and a value of a polarization-dependent impairment from an occurrence position and a difference amount of the computed power difference.

One aspect of the present invention provides an optical transmission device including: a polarization state optimization unit that optimizes a polarization state for an optical transmission signal, in which the polarization state optimization unit acquires the polarization state in a vicinity where a difference between polarizations becomes large by feedback from a reception side, causes changes back and forth with reference to the acquired polarization state, sets a change amount as a maximum value when the change amount falls below a lower limit threshold, and optimizes the polarization state.

One aspect of the present invention provides a method of monitoring impairments in optical communication, the method including: by a polarization-multiplexed optical reception device, optimizing a polarization state by rotating a reference signal received in such a way as to be close to a reception signal; computing a power profile for each polarization for the signal with the optimized polarization state; and computing a power difference between the polarizations from the power profile for each polarization, and identifies an occurrence position and a value of an impairment related to optical communication from an occurrence position and a difference amount of the computed power difference.

Advantageous Effects of Invention

The present invention makes it possible to estimate loss and mode dispersion that depend on polarization in components in an optical transmission link.

BRIEF DESCRIPTION OF DRAWINGS

Fig. 1 is a diagram illustrating the first configuration example of an optical transmission system according to the first embodiment.
Fig. 2 is a diagram illustrating the first configuration example of a digital signal processing unit according to the first embodiment.
Fig. 3 is a diagram illustrating the second configuration example of the digital signal processing unit according to the first embodiment.
Fig. 4 is a diagram illustrating a configuration example of a PMD/PDL monitoring unit according to the first embodiment.
Fig. 5 is a diagram for describing a mathematical expression used in the embodiment, a principle that can realize the present embodiment, and the like.
Fig. 6 is a diagram illustrating the first configuration example of the digital signal processing unit including the PMD/PDL monitoring unit according to the first embodiment.
Fig. 7 is a diagram illustrating the second configuration example of the digital signal processing unit including the PMD/PDL monitoring unit according to the first embodiment.
Fig. 8 is a diagram illustrating a configuration example of an optical transmission system according to the second embodiment.
Fig. 9 is a diagram illustrating an example of a position at which a PDL is loaded and a power profile for each polarization in which a polarization state is optimized in a case where 1 dB is loaded as the PDL.
Fig. 10 is a diagram illustrating estimated PDL values in a case where various PDLs are loaded.
Fig. 11 is a diagram for illustrating a polarization state optimization method.
Fig. 12 is a diagram illustrating an example of a change in rotation angle of a reference signal and PDL.
Fig. 13 is a diagram illustrating an example of a reference signal and a reception signal before polarization state optimization.
Fig. 14 is a diagram illustrating a polarization state optimization method in a case where the rotation angle of the reference signal is about 45 degrees.

DESCRIPTION OF EMBODIMENTS

Embodiments of the present invention will be described in detail with reference to the drawings.

[First Embodiment]

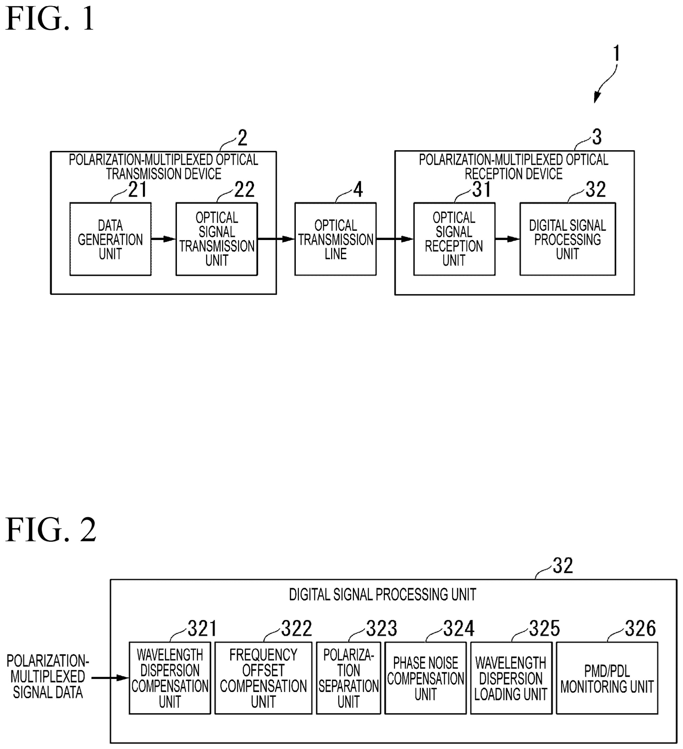

Fig. 1 is a diagram illustrating the first configuration example of an optical transmission system according to the present embodiment. An optical transmission system 1 includes a polarization-multiplexed optical transmission device 2, a polarization-multiplexed optical reception device 3, and an optical transmission line 4.
The polarization-multiplexed optical transmission device 2 includes, for example, a data generation unit 21 and an optical signal transmission unit 22.
The polarization-multiplexed optical reception device 3 includes, for example, an optical signal reception unit 31 and a digital signal processing unit 32.

The optical transmission line 4 includes, for example, an optical fiber, an optical amplifier, and the like.

The polarization-multiplexed optical transmission device 2 generates polarization-multiplexed signal data, converts the generated polarization-multiplexed signal data into an optical signal, and transmits the optical signal. The polarization-multiplexed signal data to be transmitted is a polarization-multiplexed signal that is modulated by a predetermined modulation scheme (e.g., QPSK scheme) and transmitted with vertical polarization and horizontal polarization of signal light multiplexed with different modulation signals.

The data generation unit 21 generates polarization-multiplexed signal data.

The optical signal transmission unit 22 converts the generated polarization-multiplexed signal data into an optical signal and transmits the optical signal.

The polarization-multiplexed optical reception device 3 receives the optical signal transmitted by the polarization-multiplexed optical transmission device 2 via the optical transmission line 4, converts the received optical signal into polarization-multiplexed signal data, and performs predetermined signal processing on the converted polarization-multiplexed signal data. The signal processing will be described later.

The optical signal reception unit 31 receives the optical signal transmitted by the polarization-multiplexed optical transmission device 2 via the optical transmission line 4, and converts the received optical signal into polarization-multiplexed signal data.

The digital signal processing unit 32 performs predetermined signal processing on the converted polarization-multiplexed signal data.

Next, a configuration example of the digital signal processing unit 32 of the polarization-multiplexed optical reception device 3 will be described.

Fig. 2 is a diagram illustrating the first configuration example of the digital signal processing unit according to the present embodiment. The digital signal processing unit 32 includes, for example, a wavelength dispersion compensation unit 321, a frequency offset compensation unit 322, a polarization separation unit 323, a phase noise compensation unit 324, a wavelength dispersion loading unit 325, and a PMD/PDL monitoring unit 326.

The wavelength dispersion compensation unit 321 performs wavelength dispersion compensation processing on polarization-multiplexed signal data. When an optical signal propagates through the optical transmission line 4, a signal waveform is distorted due to wavelength dispersion. Thus, for example, the wavelength dispersion compensation unit 321 performs the wavelength dispersion compensation processing by estimating the magnitude of the distortion from a reception signal and compensating for the distortion of the reception signal due to the wavelength dispersion.

The frequency offset compensation unit 322 performs frequency offset compensation processing on the polarization-multiplexed signal data. The frequency offset compensation unit 322 performs the frequency offset compensation processing of estimating and compensating for a frequency offset using, for example, two types of preambles (a short training symbol and a long training symbol).

The polarization separation unit 323 performs, on the polarization-multiplexed signal data, polarization separation processing of separating a vertical polarization signal and a horizontal polarization signal in an orthogonal polarization signal.

The phase noise compensation unit 324 performs phase noise compensation processing on the polarization-multiplexed signal data. For example, the polarization-multiplexed optical transmission device 2 has an oscillator, and the oscillator has phase noise (frequency fluctuation). The phase noise compensation unit 324 performs the phase noise compensation processing by compensating for such phase noise by a known method.

The wavelength dispersion loading unit 325 performs wavelength dispersion loading processing of loading a PDL of a predetermined value on the polarization-multiplexed signal data.

The PMD/PDL monitoring unit 326 monitors the polarization-multiplexed signal data for polarization-dependent loss (PDL) and polarization mode dispersion (PMD).

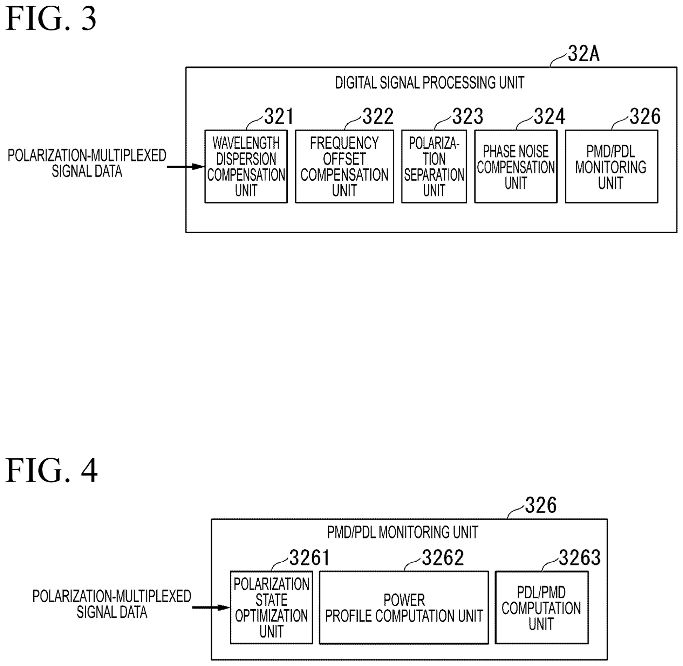

Fig. 3 is a diagram illustrating the second configuration example of the digital signal processing unit according to the present embodiment. A digital signal processing unit 32A includes, for example, the wavelength dispersion compensation unit 321, the frequency offset compensation unit 322, the polarization separation unit 323, the phase noise compensation unit 324, and the PMD/PDL monitoring unit 326.

That is, the digital signal processing unit 32A does not include the wavelength dispersion loading unit 325.

(Configuration and processing of PMD/PDL monitoring unit)

Fig. 4 is a diagram illustrating a configuration example of the PMD/PDL monitoring unit according to the present embodiment. As illustrated in Fig. 4, the PMD/PDL monitoring unit 326 includes, for example, a polarization state optimization unit 3261, a power profile computation unit 3262, and a PDL/PMD computation unit 3263.

The polarization state optimization unit 3261 optimizes a polarization state by a method to be described later.

The power profile computation unit 3262 computes a power profile for each polarization.

The PDL/PMD computation unit 3263 computes the PMD. The PDL/PMD computation unit 3263 computes the PDL. The PDL/PMD computation unit 3263 can obtain the power profiles of the individual polarizations, and a difference therebetween is obtained. Then, the PDL/PMD computation unit 3263 obtains a difference value that appears in a case where there is PMD (or PDL), as the true value of the PMD (or PDL). The principle and method for computing the PMD/PDL will be described later.

The data generation unit 21 of the polarization-multiplexed optical transmission device 2 and the digital signal processing unit 32 of the polarization-multiplexed optical reception device 3 are configured using a processor such as a central processing unit (CPU) and a memory. The data generation unit 21 is caused to function as the data generation unit 21 by the processor executing a program. The digital signal processing unit 32 is caused to function as the wavelength dispersion compensation unit 321, the frequency offset compensation unit 322, the polarization separation unit 323, the phase noise compensation unit 324, the wavelength dispersion loading unit 325, and the PMD/PDL monitoring unit 326 by the processor executing programs. All or some of the functions of the data generation unit 21 and the digital signal processing unit 32 may be implemented by using hardware such as an application specific integrated circuit (ASIC), a programmable logic device (PLD), or a field programmable gate array (FPGA). The programs may be recorded on a computer-readable recording medium. Examples of the computer-readable recording medium include a portable medium such as a flexible disk, a magnetooptical disc, a ROM, a CD-ROM, and a semiconductor storage device (e.g., a solid state drive (SSD)), and a storage device such as a hard disk or a semiconductor storage device built in a computer system. The above-described programs may be transmitted via a telecommunication line.

(Principle)

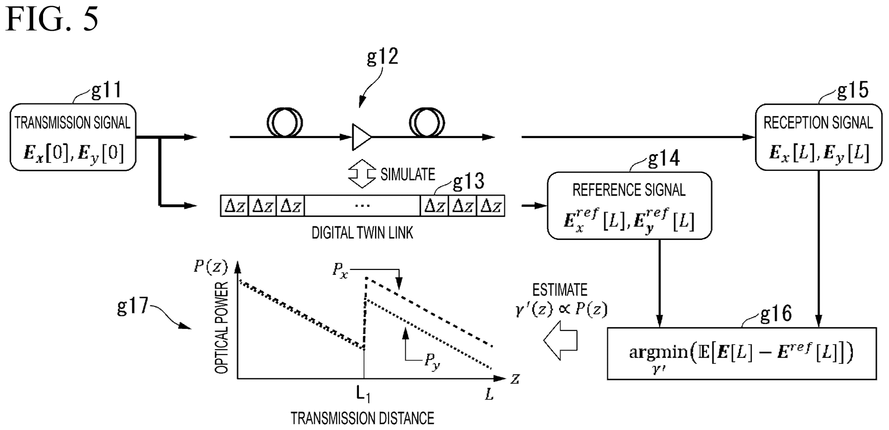

Here, a mathematical expression used in the present embodiment, a principle that can realize the present embodiment, and the like will be described. Fig. 5 is a diagram for describing a mathematical expression used in the present embodiment, a principle that can realize the present embodiment, and the like.

A polarization-multiplexed optical signal at position z and time t is expressed by $A(z,t) = [A_x(z,t), A_y(z,t)]$, and $\alpha_x(z)$ and $\alpha_y(z)$ are defined as variables representing loss and amplification. As a result, the state of propagation can be calculated from Manakov equation, and the power profile for each polarization can be obtained by the least squares method.

When $\beta_2$ is used as group velocity dispersion of the fiber and $\gamma$ is used as a non-linear coefficient, variable conversion can be performed as shown in the following Formula (1).

[Math. 1]

$$A_{x/y}\left(z,t\right) = E_{xy}\left(z,t\right)\exp\left(-\frac{1}{2}\int_0^z \alpha_{x/y}\left(z'\right)dz'\right) \quad \cdots \; (1)$$

In Formula (1), E(z,t) is a light pulse propagates through the fiber. In addition, the description will be based on the assumption that signal $E[z] = [E_x[z], E_y[z]]$ holds, and the signal is at position z ($0 \leq z \leq L$) in the transmission line (transmission distance: L (km)). As illustrated in Fig. 5, a transmission signal E[0] (reference sign g11) indicates a case where the distance z = 0 holds, and a reception signal E[L] (reference sign g15) indicates a case where the distance z = L holds.

In addition, an optical transmission line g12 is represented in a simulated manner by a digital twin link as in reference sign g13.

From Formula (1), a transfer equation can be expressed as shown in the following Formula (2).

[Math. 2]

$$\frac{\partial \mathbf{E}}{\partial z} = j\frac{\partial \mathbf{E}}{\partial t^2} - j\left(\gamma'_x\left(z\right)\left|E_x\right|^2 + \gamma'_y\left(z\right)\left|E_y\right|^2\right)\mathbf{E} \quad \cdots \; (2)$$

In Formula (2), E (bold) represents an electric field vector of a light pulse that propagates through the fiber.

Here, $\gamma'_{x/y}(z)$ is expressed by the following Formula (3) (E (bold) is normalized to 1). In the embodiment, x or y is expressed as x/y.

[Math. 3]

$$\gamma'_{x/y}(z,t) = \frac{8}{9}\gamma P(0)\exp\left(-\int_0^z \alpha_{x/y}(z')dz'\right) \quad \cdots (3)$$

Here, P is initial power in the case of z = 0. In addition, $\alpha_x$ and $\alpha_y$ are variables related to loss and amplification.

Therefore, in a case where $\gamma'_{x/y}(z)$ has been obtained, it is possible to obtain signal power $P_{x/y}(z)$ for each polarization. $\gamma^{\wedge}$, which is an estimated value of $\gamma'_{x/y}(z) = [\gamma'_x, \gamma'_y]$, can be obtained by solving a linear least squares problem of the following Formula (4) (reference sign g16 in Fig. 5).

[Math. 4]

$$\begin{bmatrix} \widehat{\gamma'_x} \\ \widehat{\gamma'_y} \end{bmatrix} = \underset{\gamma'_x,\gamma'_y}{\mathrm{argmin}}\, I = \underset{\gamma'_x,\gamma'_y}{\mathrm{argmin}}\, \mathbb{E}\left[\left\|\mathbf{E}[L] - \mathbf{E}^{ref}[L]\right\|^2\right] \quad \cdots (4)$$

In Formula (4), E[L] is a reception discrete signal (hereinafter referred to as a "reception signal"), and $E^{ref}[L] = [(E_x)^{ref}[L], (E_y)^{ref}[L]]^T$ (T represents transposition) is a reference signal (reference sign g14 in Fig. 5) that has propagated through a digitally simulated optical transmission line.

Then, the reception signal E[L] is approximated by the following Formula (5) using the first-order perturbation, and the reference signal is approximated by the following Formula (6).

[Math. 5]

$$\widehat{\mathbf{E}}[L] = \mathbf{E}_0[L] + \mathbf{E}_1[L] \quad \cdots (5)$$

[Math. 6]

$$\widehat{\mathbf{E}}^{ref}[L] = \mathbf{E}_0^{ref}[L] + \mathbf{E}_1^{ref}[L] \quad \cdots (6)$$

Note that, in Formulas (5) and (6), $E_0[L]$ and $(E_0)^{ref}[L]$ are linear solutions (or linear terms), and $E_1[L]$ and $(E_1)^{ref}[L]$ are perturbation solutions.

Assuming that the linear terms satisfy the Nyquist theorem, a cost function I is expressed by the following Formula (7).

**[Math.** 7]

$$I = \mathbb{E}\left[\left\|\mathbf{E}_1[L] - \mathbf{E}_1^{ref}[L]\right\|^2\right] \quad \cdots (7)$$

A perturbation term is expressed by the following Formula (8).

[Math. 8]

$$\begin{pmatrix} \mathbf{E}_{1,x}^{ref} \\ \mathbf{E}_{1,y}^{ref} \end{pmatrix} = \mathbf{G}\begin{pmatrix} \gamma'_x \\ \gamma'_y \end{pmatrix} = \begin{pmatrix} \mathbf{G}_{xx} & \mathbf{G}_{xy} \\ \mathbf{G}_{yx} & \mathbf{G}_{yy} \end{pmatrix}\begin{pmatrix} \gamma'_x \\ \gamma'_y \end{pmatrix} \quad \cdots (8)$$

Here, the k-th column of $G_{pq}(p, q \in \{x,y\})$ is expressed by the following Formula (9).

[Math. 9]

$$\left( \mathbf{G}_{pq} \right)_k = \left( -j\Delta z \right) \cdot \mathbf{D}_{zkL} \cdot \left( \left| \mathbf{E}_{0,q}\left[ z_k \right] \right|^2 \mathbf{E}_{0,p}\left[ z_k \right] \right)$$
$$\cdots (9)$$

In Formula (8), $D_{zkL}$ is a wavelength dispersion operator of the distance from position zk to L.

As a result, the cost function I is expressed by the following Formula (10), and the solution is determined as the following Formula (11) by the linear least squares method. In Formula (11), Re[*] represents a real part in [*]. Furthermore, in Formula (11), † (dagger) is a symbol for taking a complex conjugate and converting the complex conjugate into a transposed matrix.

[Math. 10]

$$I = \mathbb{E}\left[ \left\| \mathbf{E}_1 - \mathbf{G}\begin{pmatrix} \gamma'_x \\ \gamma'_y \end{pmatrix} \right\|^2 \right] \quad \cdots (10)$$

[Math. 11]

$$\widehat{\gamma'} = \left( \mathrm{Re}\left[ \mathbf{G}^\dagger \mathbf{G} \right] \right)^{-1} \cdot \mathrm{Re}\left[ \mathbf{G}^\dagger \mathbf{E}_1 \right] \quad \cdots (11)$$

Thus, the power profile for each polarization can be acquired.

By using this, it is possible to obtain the PDL/PMD from a power difference or a time (distance) difference. However, since the PDL/PMD depends on the polarization state, it is necessary to obtain an optimum polarization state.

First, the PDL can be modeled using a Jones matrix as shown in the following Formula (12), using a unitary matrix R representing a change in polarization state. In Formula (12), "in" represents an input-side signal, and "out" represents an output-side signal.

[Math. 12]

$$\begin{pmatrix} E_{x,out} \\ E_{y,out} \end{pmatrix} = R^{-1} \begin{pmatrix} 1 & 0 \\ 0 & \rho \end{pmatrix} R \begin{pmatrix} E_{x,in} \\ E_{y,in} \end{pmatrix} \quad \cdots \quad (12)$$

$\rho$ represents loss caused by a PDL source. Thus, the polarization state in which the power difference between the polarizations is maximized is obtained, and the PDL is estimated. Reference sign g17 in Fig. 5 indicates the power profile for each polarization in which the polarization state is optimized in a case where a predetermined value is loaded as the PDL. The horizontal axis represents the transmission distance (km), and the vertical axis represents the power (dBm). In the example of reference sign g17, the PDL can be confirmed at $L_1$ (km), which is a PDL load point.

Similarly, the PMD is also represented by a Jones matrix. When the local PMD between two polarizations is $\tau$ [sec], the following Formula (13) can be obtained.

[Math. 13]

$$\begin{pmatrix} E_{x,out} \\ E_{y,out} \end{pmatrix} = R^{-1} \begin{pmatrix} e^{j\frac{\omega\tau}{2}} & 0 \\ 0 & e^{-j\frac{\omega\tau}{2}} \end{pmatrix} R \begin{pmatrix} E_{x,in} \\ E_{y,in} \end{pmatrix} \quad \cdots \quad (13)$$

As a result, according to the present embodiment, the polarization state in which the delay difference between the polarizations is maximized can be obtained, and the PMD can be estimated.

(Functional example in first configuration example)

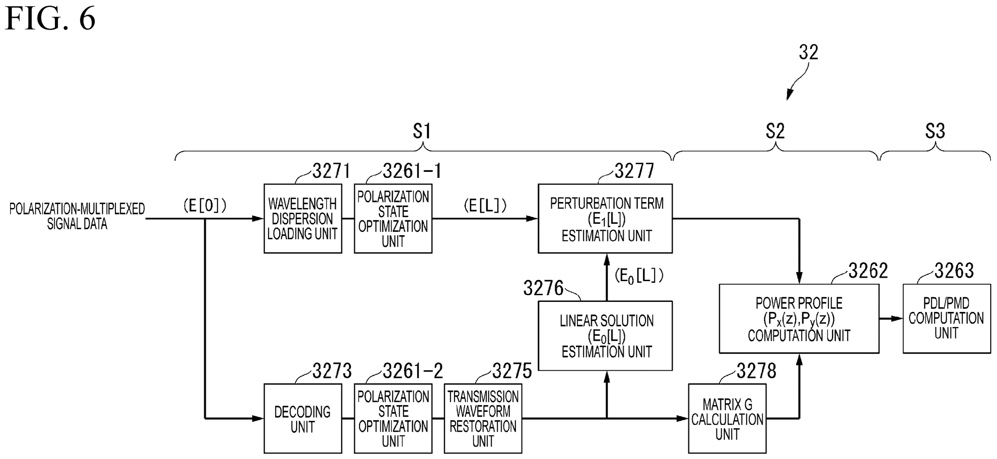

Fig. 6 is a diagram illustrating the first configuration example of the digital signal processing unit including the PMD/PDL monitoring unit according to the present embodiment. Note that this configuration corresponds to the configuration of the digital signal processing unit 32 in Fig. 2. As illustrated in Fig. 6, the digital signal processing unit 32 includes the wavelength dispersion loading unit 325, a polarization state optimization unit 3261-1, a decoding unit 3273, a polarization state optimization unit 3261-2, a transmission waveform restoration unit 3275, a linear solution estimation unit 3276, a perturbation term estimation unit 3277, a matrix G calculation unit 3278, the power profile computation unit 3262, and the PDL/PMD computation unit 3263.

This example assumes signal comparison at position z = L (km) (reception side) as can be seen from Formula (4). In the following description, a light pulse (signal data) E[z] = [$E_x$[z],$E_y$[z]] holds, and the signal is at position z ($0 \leq z \leq L$) in the transmission line (transmission distance: L (km)).

The polarization separation unit 323 (Fig. 2) outputs separated polarization-multiplexed signal data E[0] (hereinafter, the "polarization-multiplexed signal data" is also simply referred to as "signal data") to the wavelength dispersion loading unit 325 and the decoding unit 3273 (step S1).

The wavelength dispersion loading unit 325 performs wavelength dispersion loading processing on the input signal data, and outputs the signal data subjected to the wavelength dispersion loading processing to the polarization state optimization unit 3261-1 (step S1).

The polarization state optimization unit 3261-1 optimizes the polarization state for the input signal data, and outputs a reception discrete signal E[L] with the optimized polarization state to the perturbation term estimation unit 3277 (step S1).

The decoding unit 3273 performs decoding processing in accordance with the modulation scheme on the input polarization-multiplexed signal data, and outputs the signal data subjected to the decoding processing to the polarization state optimization unit 3261-2 (step S1).

The polarization state optimization unit 3261-2 optimizes the polarization state for the input signal data, and outputs the signal data with the optimized polarization state to the transmission waveform restoration unit 3275 (step S1). The method for optimizing the polarization state will be described later.

The transmission waveform restoration unit 3275 performs restoration processing by a known method on a transmission waveform for the input signal data, and the signal data subjected to the restoration processing is input to the linear solution estimation unit 3276 and the matrix G calculation unit 3278 (step S1).

The linear solution estimation unit 3276 estimates a signal $E_0[L]$ (Formula (5)), which is a linear solution, by a known method using the restored signal data, and outputs the estimated signal $E_0[L]$ to the perturbation term estimation unit 3277 (step S1).

The reception discrete signal $E[L]$ from the polarization state optimization unit 3261-1 and the signal $E_0[L]$ estimated from the linear solution estimation unit 3276 are input to the perturbation term estimation unit 3277. The perturbation term estimation unit 3277 estimates a signal $E_1[L]$ (Formula (7)), which is a perturbation term, using the reception discrete signal $E[L]$ and the signal $E_0[L]$ that are input, and outputs the signal $E_1[L]$, which is an estimated perturbation term, to the power profile computation unit 3262 (step S1).

The matrix G calculation unit 3278 calculates a matrix G (Formula (7)) using the signal data input from the transmission waveform restoration unit 3275 using Formula (8), and outputs the calculated matrix G to the power profile computation unit 3262 (step S1).

The power profile computation unit 3262 receives as input the signal $E_1[L]$, which is a perturbation term from the perturbation term estimation unit 3277, and the matrix G from the matrix G calculation unit 3278. Since there is the relationship of Formula (9), the power profile computation unit 3262 estimates $\gamma$ by the linear least squares method (Formula (10)) using the input signal $E_1[L]$ and the calculated matrix G, and computes a power profile $(P_x(z),P_y(z))$ for each polarization from the value (step S2).

The power profile for each polarization is input from the power profile computation unit 3262 to the PDL/PMD computation unit 3263. The PDL/PMD computation unit 3263 computes the power difference between the polarizations from an input power profile $(P[z])$ for each polarization, and identifies the occurrence position and value of a PDL/PMD impairment from the occurrence position and amount of the difference (step S3).

(Functional example in second configuration example)

In this example, signal comparison is performed at z = 0 (km) (transmission side) as shown in the following Formula (14).

[Math. 14]

$$\left[ \begin{array}{c} \widehat{\gamma'_x} \\ \hline \widehat{\gamma'_y} \end{array} \right] = \underset{\gamma'_x, \gamma'_y}{\operatorname{argmin}} \mathbb{E}\left[ \left\| \mathbf{E}[0] - \mathbf{E}^{ref}[0] \right\|^2 \right] \quad \cdots \ (1\,4)$$

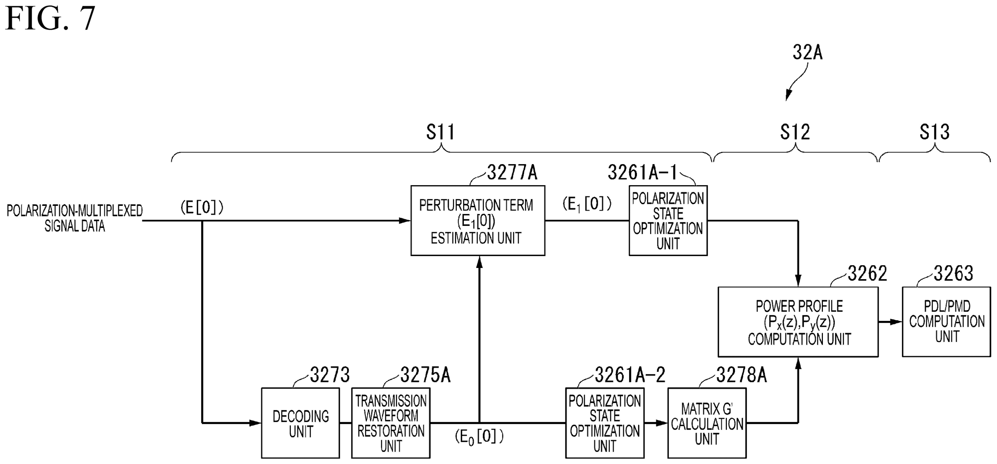

Fig. 7 is a diagram illustrating the second configuration example of the digital signal processing unit including the PMD/PDL monitoring unit according to the present embodiment. Note that this configuration corresponds to the configuration of the digital signal processing unit 32A in Fig. 3. As illustrated in Fig. 7, the digital signal processing unit 32A includes a perturbation term estimation unit 3277A, a polarization state optimization unit 3261A-1, the decoding unit 3273, a transmission waveform restoration unit 3275A, a polarization state optimization unit 3261A-2, a matrix G' calculation unit 3278A, the power profile computation unit 3262, and the PDL/PMD computation unit 3263.

The polarization-multiplexed signal data $E[0]$ separated by the polarization separation unit 323 is input to the decoding unit 3273. The decoding unit 3273 performs decoding processing in accordance with the modulation scheme on the input polarization-multiplexed signal data, and outputs the signal data subjected to the decoding processing to the transmission waveform restoration unit 3275A (step S11).

The transmission waveform restoration unit 3275A performs restoration processing by a known method on a transmission waveform for the input signal data, and outputs the signal data $E_0[0]$ subjected to the restoration processing to the perturbation term estimation unit 3277A and the polarization state optimization unit 3261A-2 (step S11).

The polarization-multiplexed signal data $E[0]$ separated by the polarization separation unit 323 and $E_0[0]$ output by the transmission waveform restoration unit 3275A are input to the perturbation term estimation unit 3277A. The perturbation term estimation unit 3277A estimates $E_1[0]$ by $E_1[0] = E[0] - E_0[0]$ using the separated polarization-multiplexed signal data $E[0]$ and the signal $E_0[0]$ to be input, and outputs signal data $E_1[0]$, which is an estimated perturbation term, to the polarization state optimization unit 3261A-1 (step S11).

The polarization state optimization unit 3261A-1 optimizes the polarization state for the input signal data $E_1[0]$, and outputs the signal data with the optimized polarization state to the power profile computation unit 3262 (step S11).

The polarization state optimization unit 3261A-2 optimizes the polarization state for the input signal data $E_0[0]$,

and outputs the signal data with the optimized polarization state to the matrix G' calculation unit (step S11).

The matrix G' calculation unit 3278A calculates a matrix G' using the signal data input from the polarization state optimization unit 3261A-2, and outputs the calculated matrix G' to the power profile computation unit 3262. The matrix G' is expressed by Formula (15). The matrix G' calculation unit 3278A calculates the matrix G' by calculating the following Formula (16) (step S11).

[Math. 15]

$$\mathbf{G'} = \begin{pmatrix} \mathbf{G'}_{xx} & \mathbf{G'}_{xy} \\ \mathbf{G'}_{yx} & \mathbf{G'}_{yy} \end{pmatrix} \quad \cdots \quad (1\,5)$$

[Math. 16]

$$\left(\mathbf{G}_{pq}\right)_k = \left(-j\Delta z\right) \cdot \mathbf{D}^{\dagger}_{0_{z_k}} \cdot \left(\left|\mathbf{E}_{0,q}\left[z_k\right]\right|^2 \mathbf{E}_{0,p}\left[z_k\right]\right)$$
$$\cdots \quad (1\,6)$$

A signal with the optimized polarization state for the perturbation term $E_1[0]$ estimated from the polarization state optimization unit 3261A-1 is input to the power profile computation unit 3262, and the matrix G' is input from the matrix G' calculation unit 3278A. The power profile computation unit 3262 estimates $\gamma'$ by the linear least squares method (the following Formula (17)) using the input signal with the optimized polarization state and the calculation result of the matrix G' calculation unit 3278A, and computes the power profile $(P_x(z), P_y(z))$ for each polarization from the value (step S12).

[Math. 17]

$$\widehat{\gamma'} = \left(\mathrm{Re}\left[\mathbf{G'}^{\dagger}\mathbf{G'}\right]\right)^{-1} \cdot \mathrm{Re}\left[\mathbf{G'}^{\dagger}\mathbf{E}_1\right] \quad \cdots \quad (1\,7)$$

The power profile for each polarization is input from the power profile computation unit 3262 to the PDL/PMD computation unit 3263. The PDL/PMD computation unit 3263 computes the power difference between the polarizations from an input power profile (P[z]) for each polarization, and identifies the occurrence position and value of a PDL/PMD impairment from the occurrence position and amount of the difference (step S13).

[Second Embodiment]

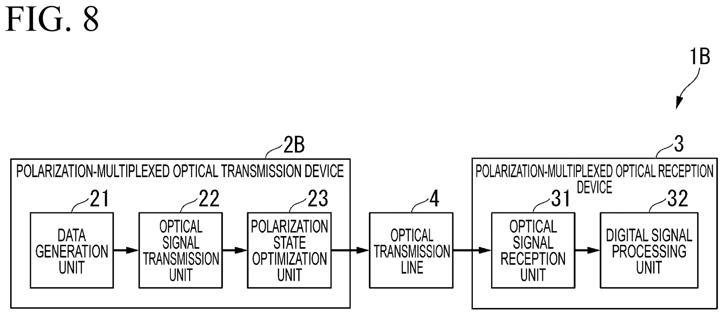

Fig. 8 is a diagram illustrating a configuration example of an optical transmission system according to the present embodiment. An optical transmission system 1B includes a polarization-multiplexed optical transmission device 2B, a polarization-multiplexed optical reception device 3, and an optical transmission line 4.

The polarization-multiplexed optical transmission device 2B includes, for example, a data generation unit 21, an optical signal transmission unit 22, and a polarization state optimization unit 23.

The polarization-multiplexed optical reception device 3 includes, for example, an optical signal reception unit 31 and a digital signal processing unit 32.

The polarization state optimization unit 23 performs polarization state optimization processing on an optical transmission signal. The polarization state optimization unit 23 may determine the range, pitch, or time interval with which a polarization state is to be constantly changed. Alternatively, the polarization state optimization unit 23 may acquire the polarization state in the vicinity where a difference between polarizations becomes large by feedback from the digital signal processing unit 32 on the reception side, cause changes back and forth with reference to the polarization state, set a change amount as a maximum value when the change amount falls below a lower limit threshold, and optimize the polarization state. Furthermore, as means for changing the polarization state at this time, a polarization controller (not illustrated) may be used in digital signal processing.

Note that the feedback during operation uses, for example, a GCC, a DSP Com-ch, a control channel of a control plane (a portion that controls how data is transferred in a network), a control channel of a network operation system (NW-OpS), and the like. The GCC, the DSP Com-ch, the control channel of the control plane, the control channel of the network operation system (NW-OpS), and the like are examples of channels through which feedback can be sent from the reception side to the transmission side. Thus, the means for sending feedback from the reception side to the transmission side is not limited thereto.

Note that the configuration example illustrated in Fig. 8 is an example, and the configuration is not limited thereto. For example, in the case of the configuration in Fig. 8, a PMD/PDL monitoring unit 326 of the polarization-multiplexed optical reception device 3 may or may not include a polarization state optimization unit 3261.

(Modification examples)

In each of the above-described embodiments, in order to prevent a specific situation in which distinction from an impairment that does not depend on the polarization state is not possible, a reference signal may be arranged in advance so that polarization states before and after the entire data length are different. Alternatively, the reference signal may be arranged so that the polarization state is changed into a plurality of polarization states on the transmission side and averaged.

In each of the above-described embodiments, also in a case where a plurality of measurement targets is assumed, it is possible to detect a plurality of PDLs and PMDs by optimizing the polarization state for each measurement target.

[Evaluation]

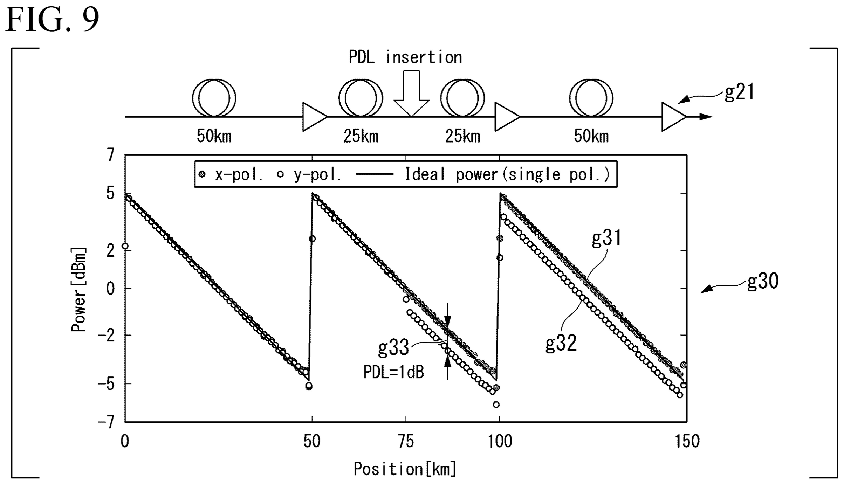

Fig. 9 is a diagram illustrating an example of a position at which a PDL is loaded and a power profile for each polarization in which a polarization state is optimized in a case where 1 dB is loaded as the PDL. Reference sign g21 represents an optical transmission line. The horizontal axis of reference sign g30 represents the position (km), and the vertical axis represents the power (dBm). Reference sign g31 indicates a component (x-pol) in the x-axis direction, and reference sign g32 indicates a component (y-pol) in the y-axis direction.

In the evaluation, simulation of a transmission distance of 150 km of 50 km × 3 spans was performed (noise figure of optical amplifier was set to 5 dB) using an input power 5 (dBm), single-channel 128-GBd polarization-multiplexed probabilistic constellation-shaped (PCS) 64-QAM signal.

As indicated by reference sign g21 in Fig. 9, PDLs of 1, 0.7, 0.4, 0.2, and 0.1 (dB) are loaded at a 75 (km) point.

Reference sign g30 is an example in which PDL of 1 (dB) is loaded at the 75 (km) PDL load point, and the PDL can be confirmed at the 75 (km) point of loading.

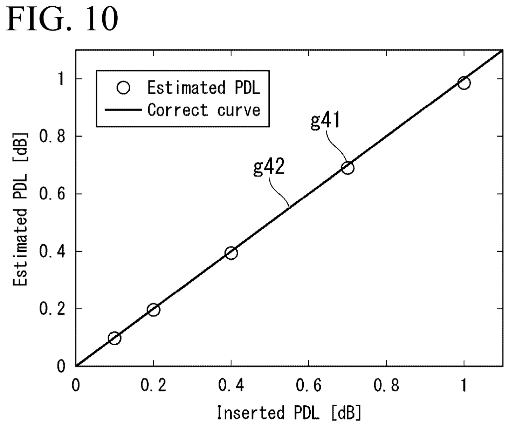

Fig. 10 is a diagram illustrating estimated PDL values in a case where various PDLs are loaded. The horizontal axis represents the set PDL value (dB), and the vertical axis represents the estimated PDL (dB). In addition, a circle (reference sign g41) indicates a PDL value, and a line (reference sign g42) indicates a correct curve.

From the result of the above evaluation, according to the configuration and method of the present embodiment, it has been confirmed that both the position and the value can be estimated with high accuracy at a step size of 1 (km).

(Polarization state optimization)

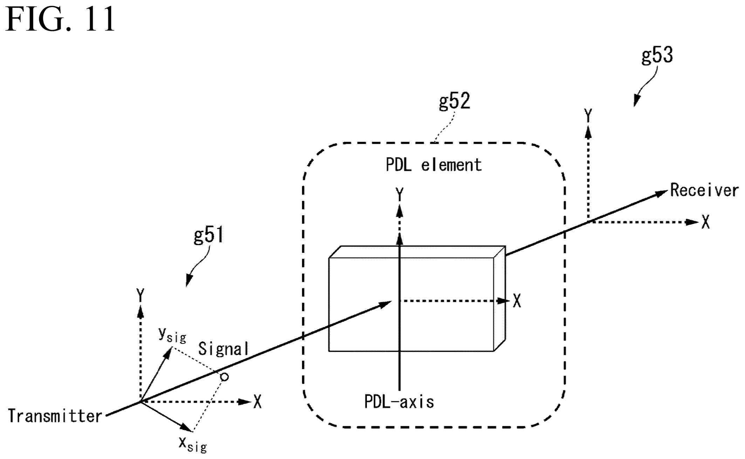

Fig. 11 is a diagram for illustrating a polarization state optimization method. Reference sign g51 indicates a transmission signal, reference sign g52 indicates a PDL, and reference sign g53 indicates a reception side.

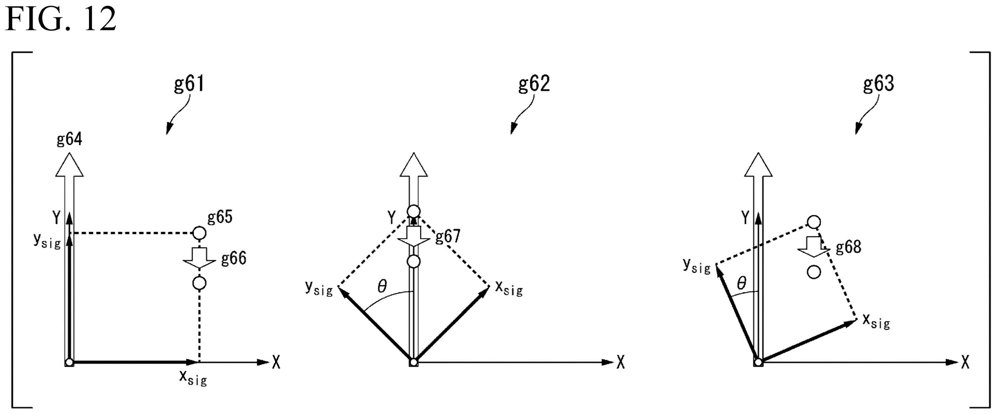

Fig. 12 is a diagram illustrating an example of a change in rotation angle of the reference signal and PDL. In reference signs g61 to g63, the horizontal axis is the x-axis, and the vertical axis is the y-axis. In addition, $x_{sig}$ and $y_{sig}$ represent an x component and a y component of the reference signal. $\theta$ is a rotation angle of the reference signal. Reference sign g61 indicates a case where the rotation angle of the reference signal is 0 degrees (no rotation), reference sign g62 indicates a case where the rotation angle of the reference signal is about 45 degrees, and reference sign g63 indicates a case where the rotation angle of the reference signal is about 30 degrees. An arrow g64 indicates a PDL axis, reference sign g65 indicates a signal, and reference signs g66 to g68 indicate PDL values.

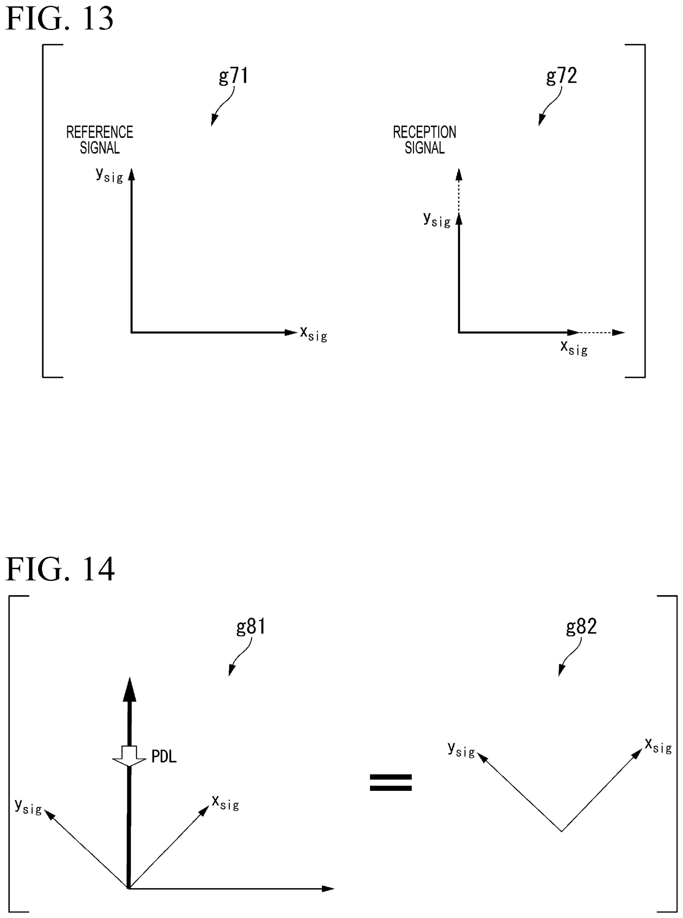

Fig. 13 is a diagram illustrating an example of a reference signal and a reception signal before polarization state optimization. Reference sign g71 indicates a reference signal, and reference sign g72 indicates a reception signal.

Fig. 14 is a diagram illustrating a polarization state optimization method in a case where the rotation angle of the reference signal is about 45 degrees (reference sign g62 in Fig. 12).

The polarization state optimization unit 3261 rotates the reference signal so that the PDL is received at an angle $\theta$ as indicated by reference sign g62 in Fig. 12 in such a way as to be close to a reception signal obtained by reference sign g62 in Fig. 12, thereby obtaining an optimum polarization state. However, at the time of this processing, since the reception signal also needs to be rotated in a similar manner, the polarization state optimization unit 3261 also rotates the reception signal in a similar manner.

Note that the above-described method for optimizing the polarization state is an example, and the method is not limited thereto.

In the optical transmission system 1 configured as described above, the polarization-multiplexed optical reception device 3 includes the PMD/PDL monitoring unit 326, and it is therefore possible to estimate loss and mode dispersion that depend on polarization in components in an optical transmission link and identify the occurrence amount and the occurrence positions of the impairments.

Alternatively, in the optical transmission system 1B, the polarization-multiplexed optical transmission device 2B includes the polarization state optimization unit 23, and it is therefore possible to estimate loss and mode dispersion that depend on polarization in components in an optical transmission link and identify the occurrence amount and the occurrence positions of the impairments.

Although the embodiments of the present invention have been described in detail with reference to the drawings, the specific configuration is not limited to the embodiments, and includes design and the like without departing from the gist of the present invention.

INDUSTRIAL APPLICABILITY

The present invention is applicable to an optical transmission/reception system, an optical transmission device, an optical reception device, and the like.

REFERENCE SIGNS LIST

| | |
|---|---|
| 1, 1B | Optical transmission system |
| 2, 2A | Polarization-multiplexed optical transmission device |
| 3 | Polarization-multiplexed optical reception device |
| 4 | Optical transmission line |
| 21 | Data generation unit |
| 22 | Optical signal transmission unit |
| 23 | Polarization state optimization unit |
| 31 | Optical signal reception unit |
| 32 | Digital signal processing unit |
| 321 | Wavelength dispersion compensation unit |
| 322 | Frequency offset compensation unit |
| 323 | Polarization separation unit |
| 324 | Phase noise compensation unit |
| 325 | Wavelength dispersion loading unit |
| 326 | PMD/PDL monitoring unit |
| 3261, 3261-1, 3261-2, 3261A-1, 3261A-2 | Polarization state optimization unit |
| 3262 | Power profile computation unit |
| 3263 | PDL/PMD computation unit |
| 3273 | Decoding unit |
| 3275, 3275A | Transmission waveform restoration unit |
| 3276 | Linear solution estimation unit |
| 3277, 3277A | Perturbation term estimation unit |
| 3278 | Matrix G calculation unit |
| 3278A | Matrix G' calculation unit |

**Claims**

1. An optical reception device comprising a monitoring unit configured to:

   optimize a polarization state by rotating each of a reference signal received in such a way as to be close to a reception signal and the reception signal;
   compute a power profile for each polarization for the signal with the optimized polarization state; and
   compute a power difference between the polarizations from the power profile for each polarization, and identify an occurrence position and a value of a polarization-dependent impairment from an occurrence position and a difference amount of the computed power difference.

2. An optical transmission device comprising a polarization state optimization unit that optimizes a polarization state for an optical transmission signal, wherein

the polarization state optimization unit acquires the polarization state in a vicinity where a difference between polarizations becomes large by feedback from a reception side, causes changes back and forth with reference to the acquired polarization state, sets a change amount as a maximum value when the change amount falls below a lower limit threshold, and optimizes the polarization state.

3. A method of monitoring impairments in optical communication, the method comprising:

by a polarization-multiplexed optical reception device,
optimizing a polarization state by rotating a reference signal received in such a way as to be close to a reception signal;
computing a power profile for each polarization for the signal with the optimized polarization state; and
computing a power difference between the polarizations from the power profile for each polarization, and identifies an occurrence position and a value of an impairment related to optical communication from an occurrence position and a difference amount of the computed power difference.

4. The method of monitoring impairments in optical communication according to claim 3, comprising:

optimizing the polarization state;
estimating a perturbation term using the optimized signal and a signal that is an estimated linear solution; and
computing a power profile for each polarization using the estimated perturbation term.

# FIG. 1

1

POLARIZATION-MULTIPLEXED OPTICAL
TRANSMISSION DEVICE    2

| DATA GENERATION UNIT  21 | → | OPTICAL SIGNAL TRANSMISSION UNIT  22 |

→ OPTICAL TRANSMISSION LINE  4 →

POLARIZATION-MULTIPLEXED OPTICAL
RECEPTION DEVICE    3

| OPTICAL SIGNAL RECEPTION UNIT  31 | → | DIGITAL SIGNAL PROCESSING UNIT  32 |

# FIG. 2

32

DIGITAL SIGNAL PROCESSING UNIT

POLARIZATION-MULTIPLEXED SIGNAL DATA →

| WAVELENGTH DISPERSION COMPENSATION UNIT  321 | FREQUENCY OFFSET COMPENSATION UNIT  322 | POLARIZA-TION SEPARATION UNIT  323 | PHASE NOISE COMPENSATION UNIT  324 | WAVELENGTH DISPERSION LOADING UNIT  325 | PMD/PDL MONITORING UNIT  326 |

FIG. 3

DIGITAL SIGNAL PROCESSING UNIT 32A

POLARIZATION-MULTIPLEXED SIGNAL DATA →

| 321 WAVELENGTH DISPERSION COMPENSATION UNIT | 322 FREQUENCY OFFSET COMPENSATION UNIT | 323 POLARIZA-TION SEPARATION UNIT | 324 PHASE NOISE COMPENSATION UNIT | 326 PMD/PDL MONITORING UNIT |

FIG. 4

PMD/PDL MONITORING UNIT 326

POLARIZATION-MULTIPLEXED SIGNAL DATA →

| 3261 POLARIZATION STATE OPTIMIZATION UNIT | 3262 POWER PROFILE COMPUTATION UNIT | 3263 PDL/PMD COMPUTATION UNIT |

# FIG. 5

g11
TRANSMISSION SIGNAL
$E_x[0], E_y[0]$

g12

SIMULATE

g13
$\Delta z$ $\Delta z$ $\Delta z$ ... $\Delta z$ $\Delta z$ $\Delta z$
DIGITAL TWIN LINK

g14
REFERENCE SIGNAL
$E_x^{ref}[L], E_y^{ref}[L]$

g15
RECEPTION SIGNAL
$E_x[L], E_y[L]$

ESTIMATE
$\gamma'(z) \propto P(z)$

g16
$$\underset{\gamma'}{\mathrm{argmin}}\left(\mathbb{E}\left[E[L] - E^{ref}[L]\right]\right)$$

g17

$P(z)$

OPTICAL POWER

$P_x$

$P_y$

$L_1$   $L$   $z$

TRANSMISSION DISTANCE

# FIG. 6

EP 4 738 727 A1

POLARIZATION-MULTIPLEXED SIGNAL DATA → (E[0])

S1

**3271** WAVELENGTH DISPERSION LOADING UNIT

**3261-1** POLARIZATION STATE OPTIMIZATION UNIT → (E[L])

**3277** PERTURBATION TERM $(E_1[L])$ ESTIMATION UNIT

**3276** LINEAR SOLUTION $(E_0[L])$ ESTIMATION UNIT → $(E_0[L])$

**3273** DECODING UNIT

**3261-2** POLARIZATION STATE OPTIMIZATION UNIT

**3275** TRANSMISSION WAVEFORM RESTORATION UNIT

**3278** MATRIX G CALCULATION UNIT

S2

**3262** POWER PROFILE $(P_x(z), P_y(z))$ COMPUTATION UNIT

S3

**3263** PDL/PMD COMPUTATION UNIT

32

# FIG. 7

32A

S11     S12     S13

POLARIZATION-MULTIPLEXED SIGNAL DATA   $(E[0])$

3277A
PERTURBATION TERM $(E_1[0])$ ESTIMATION UNIT

$(E_1[0])$

3261A-1
POLARIZATION STATE OPTIMIZATION UNIT

3262
POWER PROFILE $(P_x(z), P_y(z))$ COMPUTATION UNIT

3263
PDL/PMD COMPUTATION UNIT

3273
DECODING UNIT

3275A
TRANSMISSION WAVEFORM RESTORATION UNIT

$(E_0[0])$

3261A-2
POLARIZATION STATE OPTIMIZATION UNIT

3278A
MATRIX G' CALCULATION UNIT

EP 4 738 727 A1

18

FIG. 8

POLARIZATION-MULTIPLEXED OPTICAL TRANSMISSION DEVICE 2B

21 DATA GENERATION UNIT

22 OPTICAL SIGNAL TRANSMISSION UNIT

23 POLARIZATION STATE OPTIMIZATION UNIT

4 OPTICAL TRANSMISSION LINE

POLARIZATION-MULTIPLEXED OPTICAL RECEPTION DEVICE 3

31 OPTICAL SIGNAL RECEPTION UNIT

32 DIGITAL SIGNAL PROCESSING UNIT

1B

EP 4 738 727 A1

FIG. 9

FIG. 10

# FIG. 11

EP 4 738 727 A1

FIG. 12

# FIG. 13

g71

REFERENCE
SIGNAL

$y_{sig}$

$x_{sig}$

g72

RECEPTION
SIGNAL

$y_{sig}$

$x_{sig}$

# FIG. 14

g81

PDL

$y_{sig}$   $x_{sig}$

$=$

g82

$y_{sig}$   $x_{sig}$

## INTERNATIONAL SEARCH REPORT

International application No.

**PCT/JP2023/024425**

| A. | CLASSIFICATION OF SUBJECT MATTER |
|---|---|

*H04B 10/07*(2013.01)i
FI: H04B10/07

According to International Patent Classification (IPC) or to both national classification and IPC

| B. | FIELDS SEARCHED |
|---|---|

Minimum documentation searched (classification system followed by classification symbols)

H04B10/07

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | SASAI, Takeo et al. Performance Limit of Fiber-Longitudinal Power Profile Estimation Methods. Journal of Lightwave Technology. 01 June 2023, vol. 41, issue 11, pp. 3278-3289<br>pp. 3278-3289 | 1, 3-4 |
| A | ETO, Motohiko et al. Location-resolved PDL Monitoring with Rx-side Digital Signal Processing in Multi-span Optical Transmission System. 2022 Optical Fiber Communications Conference and Exhibition (OFC). 06 March 2022, pp. 1-3<br>pp. 1-3 | 1, 3-4 |
| A | SASAI, Takeo et al. 0.77-dB Anomaly Loss Localization Based on DSP-Based Fiber-Longitudinal Power Estimation Using Linear Least Squares. 2023 Optical Fiber Communications Conference and Exhibition (OFC). 05 March 2023, pp. 1-3<br>pp. 1-3 | 1, 3-4 |
| T | TAKAHASHI, Minami et al. DSP-based PDL Estimation and Localization in Multi-Span Optical Link Using Least Squares-based Longitudinal Power Monitoring. 2023 Opto-Electronics and Communications Conference (OECC). 02 July 2023, pp. 1-6<br>pp. 1-6 | 1, 3-4 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2023/024425**

| | |
|---|---|
| **Box No. II** | **Observations where certain claims were found unsearchable (Continuation of item 2 of first sheet)** |

This international search report has not been established in respect of certain claims under Article 17(2)(a) for the following reasons:

1. ☐ Claims Nos.:
because they relate to subject matter not required to be searched by this Authority, namely:

2. ☑ Claims Nos.: **2**
because they relate to parts of the international application that do not comply with the prescribed requirements to such an extent that no meaningful international search can be carried out, specifically:

The specific matter of a "polarization state optimization unit," which is the only component of claim 2, is unclear. That is, with regard to "acquiring a nearby polarization state in which a difference between polarization waves becomes large through feedback from the reception side," it is unclear what is fed back as "feedback from the reception side," What difference the "difference between polarization waves" refers to, and what the "nearby polarization state" refers to, and how close the nearby polarization state is and what type of polarization state is. It is unclear that "on the basis of the acquired polarization state, the polarization state is optimized by changing the acquired polarization state before and after the acquired polarization state and setting the change amount as the maximum value when the change amount is less than a lower limit threshold."

3. ☐ Claims Nos.:
because they are dependent claims and are not drafted in accordance with the second and third sentences of Rule 6.4(a).

Form PCT/ISA/210 (continuation of first sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAKEO SASAI** ; **MASANORI NAKAMURA et al.** 0.77-dB Anomaly Loss Localization Based on DSP-Based Fiber-Longitudinal Power Estimation Using Linear Least. *Optical Fiber Communications Conference and Exhibition (OFC)*, 2023